Europäisches Patentamt

European Patent Office

Office européen des brevets

(19)

(11) Numéro de publication : **0 532 407 A1**

## (12) DEMANDE DE BREVET EUROPEEN

(21) Numéro de dépôt : **92402454.0**

(22) Date de dépôt : **09.09.92**

(51) Int. Cl.⁵ : **B29C 47/28**, B29C 47/30, B29C 33/00

(30) Priorité : **10.09.91 FR 9111165**

(43) Date de publication de la demande :
**17.03.93 Bulletin 93/11**

(84) Etats contractants désignés :
**BE DE ES FR GB IT NL SE**

(71) Demandeur : **VETROTEX FRANCE**
130, avenue des Follaz
F-73000 Chambéry (FR)

(72) Inventeur : **Boissonnat, Philippe**
64, avenue de l'Eglise
F-73230 Barby (FR)
Inventeur : **Fedorowsky, Robert**
5, Impasse de la Grimotière
F-73100 Aix Les Bains (FR)
Inventeur : **Roncato, Giordano**
35, Chemin des Touvières
F-73100 Aix Les Bains (FR)

(74) Mandataire : **Breton, Jean-Claude et al**
SAINT-GOBAIN RECHERCHE 39, quai Lucien
Lefranc
F-93300 Aubervilliers Cedex (FR)

(54) **Tête d'extrusion pour la production de fils à partir d'une matière rendue pâteuse par chauffage.**

(57)    Tête d'extrusion (14) pour la production de fils à partir d'une matière rendue pâteuse par chauffage, comprenant au moins un corps (16) définissant une chambre de répartition (15) de matière pâteuse au-dessus d'une plaque (38) percée d'orifices d'extrusion ; la chambre est alimentée par un canal latéral supérieur (19) et comporte une section de passage vers le bas décroissante sur au moins une partie (24) de la hauteur de la chambre, au fur et à mesure que l'on s'éloigne vers le bas. La décroissance est agencée pour engendrer dans le temps des contraintes de pression et de cisaillement sur la matière pâteuse, entre le canal d'alimentation latéral (19) et le bas de la chambre (27), respectivement sensiblement identiques quel que soit le chemin emprunté par ladite matière pâteuse.

FIG. 2

EP 0 532 407 A1

La présente invention concerne les têtes d'extrusion pour la production de fils à partir d'une matière thermoplastique rendue pâteuse par chauffage, du type comprenant au moins un corps définissant une chambre de répartition de matière pâteuse au-dessus d'une plaque horizontale percée d'orifices d'extrusion, la chambre étant alimentée en matière pâteuse par au moins un canal d'alimentation latéral supérieur allongé autour d'un axe dans sa partie terminale de jonction avec la chambre.

Elle trouve une application particulièrement importante bien que non-exclusive dans le domaine de la fabrication de fils synthétiques à partir de polymère fondu.

On connaît déja des têtes d'extrusion pour produire des fils synthétiques. Elles comprennent un corps muni d'une zone de distribution de la matière pâteuse et d'une chambre d'extrusion équipée à sa base d'une plaque de filature percée de trous à partir desquels sont formés des filaments continus. Ces filaments sont rassemblés de manière à donner naissance à un ou plusieurs fils.

Les trous percés dans la plaque de filature peuvent être répartis sur une surface rectangulaire, triangulaire ou annulaire.

Les têtes d'extrusion connues comportent par ailleurs et en général un canal d'alimentation en polymère fondu central disposé dans l'axe de la tête d'extrusion et du, ou des, fil(s) produit(s).

Dans ce type de tête d'extrusion, il n'est pas facile, voire impossible, d'introduire un élément central filiforme ou âme au sein du faisceau de filaments synthétiques extrudés.

On connaît également une tête d'extrusion (US-3 307 216) qui autorise l'introduction d'un corps à l'intérieur du faisceau de filaments produits. Une telle tête comporte un corps cylindrique définissant une chambre de répartition annulaire de la matière pâteuse au-dessus d'une plaque percée d'orifices. La chambre est alimentée en matière pâteuse par un canal d'alimentation latéral supérieur. Le corps comporte un évidement cylindrique central dans lequel on peut introduire un élément que l'on veut intégrer au faisceau de filaments, qui l'enveloppe après extrusion.

Une telle tête présente cependant également des inconvénients.

En effet, elle ne permet pas d'avoir, au niveau de la plaque percée de trous par lesquels sortent les filaments extrudés, un produit pâteux présentant une viscosité homogène, quelque soit le trajet suivi par le produit entre le canal d'introduction et la plaque.

Ceci entraîne des différences de qualité et de solidité des filaments de matériau extrudé obtenus.

La présente invention vise à fournir une tête d'extrusion pour la production de fils à partir d'une matière rendue pâteuse par chauffage répondant mieux que celles antérieurement connues aux exigences de la pratique, notamment en ce qu'elle présente une alimentation en produit pâteux latérale, ce qui autorise notamment l'introduction d'un élément central dans le faisceau de filaments extrudés, tout en garantissant une grande homogénéité de qualité et de solidité pour les fils extrudés obtenus, et ce de façon aisée à mettre en oeuvre, et pour un coût non excessif.

Dans ce but la présente invention propose notamment, une tête d'extrusion pour la production de fils a partir d'une matière rendue pâteuse par chauffage du type décrit ci-dessus, caractérisée en ce que la chambre de répartition comporte une section de passage vers le bas de la matière pâteuse, dans le plan horizontal, décroissante sur au moins une partie de la hauteur de la chambre, au fur et à mesure que l'on s'éloigne vers le bas du canal d'alimentation, cette décroissance étant agencée pour engendrer dans le temps des contraintes de pression et de cisaillement sur la matière pâteuse, entre le canal d'alimentation latéral et le bas de la chambre, respectivement sensiblement identiques quel que soit le chemin emprunté par ladite matière pâteuse pour s'écouler dudit canal d'alimentation latéral au bas de ladite chambre.

Dans des modes de réalisation avantageux, on a de plus recours à l'une et/ou à l'autre des dispositions suivantes :

* la chambre présente une zone inférieure en forme de fente de section verticale décroissante, au fur et à mesure que l'on s'éloigne du canal d'alimentation latéral,
* la largeur entre parois dans un même plan horizontal étant désignée par le terme entrefer (H), la zone inférieure en forme de fente est annulaire et présente des parois latérales verticales cylindriques d'entrefer (H) constant, et de hauteur (Y), mesurée par rapport au plan horizontal délimitant le bas de la partie inférieure de la chambre (ou par rapport à la plaque, à une hauteur constante près), décroissante au fur et à mesure que l'on s'éloigne du canal d'alimentation latéral,
* la zone inférieure en forme de fente présente des parois latérales verticales cylindriques d'entrefer (H), et de hauteur (Y) par rapport au plan délimitant le bas de la chambre, tous deux décroissants au fur et à mesure que l'on s'éloigne du canal d'alimentation latéral,
* la chambre comporte une zone supérieure en forme de goulotte dont la section transversale (s) décroît au fur et à mesure que l'on s'éloigne de l'orifice d'entrée du canal d'alimentation latéral, qui débouche dans ladite chambre,
* la tête comporte de plus une chambre d'extrusion annulaire de section transversale constante, par exemple cônique divergente vers le bas (en forme de trapèze renversé), située au-dessus de la plaque d'extrusion, dans le prolongement de la chambre de répartition,

∗ R(1) désignant le rayon hydraulique de la goulotte, défini s'il y a lieu à partir du diamètre hydraulique équivalent d'une section de goulotte par la formule :

$$D_E = 4 . \text{Surface/Périmètre}$$

le rayon hydraulique [R(1)] de la goulotte et la hauteur [Y(1)] de la fente mesurés à une distance 1 de l'axe du canal d'alimentation latéral, le long de l'axe de la goulotte, sont déterminés par les formules suivantes :

- $R(1) = R_o (1/L)^{1/3}$
- $Y(1) = Y_o (1/L)^{2/3}$

avec :
- $R_o$ : rayon hydraulique de la goulotte au droit de l'axe du canal d'alimentation,
- L : longueur de la fente mesurée a partir de l'axe du canal d'alimentation,
- $Y_o$ : hauteur maximum de la fente, au droit de l'axe du canal d'alimentation,
- $R_o = K.(H^2.L)^{1/3}$ et $Y_o = K'.(H^2.L)^{1/3}$, K et K' étant des constantes,
- K est sensiblement égal à 0.607 et K' à 2.3398,

∗ la tête d'extrusion comporte deux portions de chambre de répartition symétriques par rapport au plan vertical passant par l'axe du canal d'alimentation,

∗ la section transversale de la goulotte de la zone supérieure est circulaire, demi-circulaire, carrée ou rectangulaire,

∗ la section horizontale de la zone inférieure de la chambre de répartition présente une configuration en O, en C, en U, les extrémités des branches du C ou du U étant plus ou moins écartées,

∗ la tête présente plusieurs corps identiques, chacun alimenté par un canal d'alimentation latéral respectif situé en partie supérieure desdits corps,

∗ les corps sont répartis autour d'un noyau creux ou évidement central,

∗ la tête comprend un poinçon creux cylindrique qui la traverse de part en part, la chambre s'enroulant autour dudit poinçon,

∗ la zone inférieure de la chambre débouche sur une chambre d'extrusion annulaire équipée en sa partie inférieure, au-dessus de la plaque percée d'orifices d'extrusion, d'une grille complémentaire d'homogénéisation par exemple constituée d'une plaque annulaire percée de trous servant à améliorer l'homogénéité des vitesses de la matière pâteuse, avant extrusion au travers de ladite plaque,

∗ la tête comporte des moyens de chauffage par cartouche (élément chauffant cylindrique placé dans le, et/ou autour du, corps de la tête), amovibles, ou non, permettant, ou non, de définir plusieurs zones indépendantes pouvant être régulées séparément,

∗ la tête comporte des moyens de chauffage par fluide caloporteur ou par résistance électrique cylindrique.

L'invention concerne également une tête d'extrusion pour la production de fils à partir de matière synthétique fondue comprenant au moins un corps définissant une chambre de répartition de la matière synthétique fondue au-dessus d'une plaque horizontale percée d'orifices d'extrusion, ladite chambre étant alimentée en matière synthétique par au moins un canal d'alimentation latéral supérieur caractérisée en ce que la chambre comporte :

∗ une zone supérieure en forme de goulotte dont la section transversale (s) décroît au fur et à mesure que l'on s'éloigne de l'orifice d'entrée du canal d'alimentation latéral, qui débouche dans ladite chambre et,

∗ une zone inférieure annulaire présentant des parois latérales verticales cylindriques d'entrefer (H) constant, et de hauteur (y), par rapport à la plaque, décroissante au fur et à mesure que l'on s'éloigne dudit orifice d'entrée.

Avantageusement la chambre est symétrique par rapport au plan vertical médian du canal d'alimentation. L'invention sera mieux comprise à la lecture de la description qui suit de modes particuliers de réalisation donnés à titre d'exemple non limitatif.

La description se réfère aux dessins qui l'accompagnent, dans lesquels :

- la figure 1 est une vue en perspective, d'un corps avec chambre de répartition pour tête d'extrusion, selon un mode de réalisation de l'invention,
- la figure 2 est une vue en coupe verticale d'une tête d'extrusion, selon le mode de réalisation de l'invention plus particulièrement décrit ici, munie d'une chambre de réparti tion du type de celle de la figure 1, et comportant une chambre d'extrusion et une grille de répartition, au-dessus de la grille d'extrusion,
- la figure 3A est une vue en coupe verticale suivant IIIA-IIIA de la figure 1, montrant de plus une chambre d'extrusion dans le prolongement vers le bas de la chambre de répartition,
- la figure 3B est une vue en coupe suivant IIIB-IIIB de la figure 3A,
- la figure 3C est une vue en coupe suivant IIIC-IIIC de la figure 3A,
- la figure 3D est une vue de dessous de la figure 3A,

- la figure 4 est une vue schématique, latérale, de la chambre de répartition de la figure 1 et des figures 3A a 3D, précisant les paramètres de calcul des différentes parties de la chambre de répartition selon ce mode de réalisation particulier de l'invention,

- la figure 5 précise la définition d'un des paramètres de dimensionnement de la chambre en référence à la figure 4,

- la figure 6 est une vue de dessous de la figure 4,

- les figures 7A, 7B, 7C, 7D et 7E sont des profils de section transversale verticale de parties supérieure et inférieure de chambre de répartition selon des modes de réalisation de l'invention,

- les figures 8A, 8B, 8C et 8D sont des représentations schématiques, en vue de dessus, de modes de réalisation de chambres de répartition, selon l'invention, symétriques par rapport au plan vertical passant par l'axe du conduit d'alimentation,

- les figures 9A, 9B et 9C sont des vues de dessus de têtes d'extrusion selon des modes de réalisation particuliers de l'invention, de forme circulaire ou en une ou plusieurs portions de cercle,

- les figures 10A, 10B et 10C sont d'autres modes de réalisation en vue de dessus, de têtes d'extrusion selon l'invention, comportant plusieurs corps,

- la figure 11 est une vue en perspective de la chambre de répartition d'une tête selon un autre mode de réalisation de l'invention,

- la figure 12 est un schéma de principe d'un dispositif mettant en oeuvre une tête d'extrusion selon le mode de réalisation de l'invention plus particulièrement décrit ici.

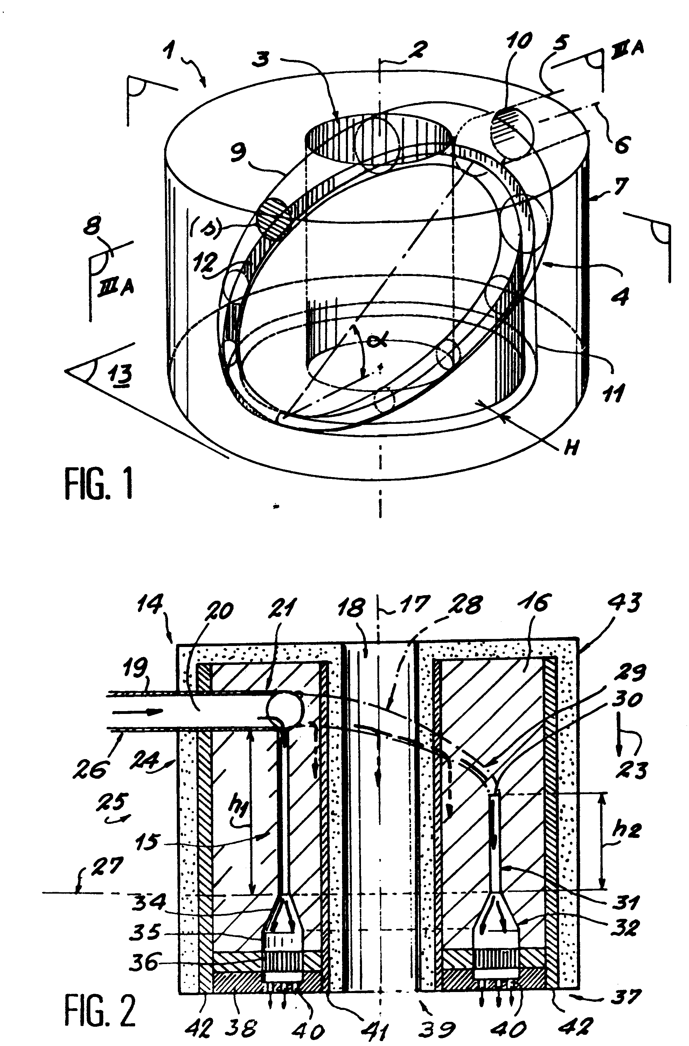

La figure 1 montre un corps 1 de tête d'extrusion comprenant une chambre de répartition selon le mode de réalisation de l'invention plus particulièrement décrit ici.

Le corps 1, par exemple constitué en acier inox ou plus généralement en matériau thermiquement conducteur, est un cylindre d'axe vertical 2, percé de part en part d'un poinçon creux cylindrique central 3 de même axe vertical.

Le corps est moulé et définit une chambre de répartition 4 propre à recevoir la matière synthétique fondue, par exemple du nylon ou du polyéthylène. La chambre est constituée par un évidement réalisé dans le corps lors de son moulage.

Un tube 5 d'alimentation en matière synthétique latéral, s'étendant autour d'un axe 6 perpendiculaire à l'axe vertical 2 du corps 1 sur au moins une partie terminale de jonction avec le corps, est prévu en partie haute 7 du corps. La chambre est symétrique par rapport au plan vertical 8 passant par l'axe 6 dudit tube, et s'enroule autour du poinçon creux 3.

La chambre de répartition 4 comporte une zone supérieure 9 ou goulotte dont la section transversale (s) est circulaire et décroît au fur et à mesure que l'on s'éloigne de l'orifice d'entrée 10 du tube 5 d'alimentation latéral, qui débouche dans la chambre. La goulotte présente donc une forme générale en croissant dont les cornes se referment sur elles-mêmes autour d'un plan de symétrie transversal incliné par rapport au plan horizontal d'un angle $\alpha$. La chambre de répartition 4 présente par ailleurs une zone inférieure 11 cylindrique annulaire de même axe vertical 2 que le corps, possédant une largeur ou entrefer H dans le plan horizontal constant, et une hauteur (y) mesurée entre le fonds 12 de la goulotte 9 et le plan horizontal inférieur 13 délimitant la chambre de répartition en partie basse, décroissante au fur et à mesure que l'on s'éloigne de l'orifice d'entrée 10 du tube 5, dans la chambre.

Sur la figure 2, on a représenté en coupe verticale, une tête d'extrusion 14 selon un mode de réalisation de l'invention présentant une chambre de répartition 15 du type de celle de la figure 1.

La tête 14 comprend un corps 16, dit corps de filière, cylindrique, autour d'un axe vertical 17 comprenant un évidement ou poinçon central creux, et cylindrique 18 de même axe 17.

La chambre est alimentée latéralement en matière pâteuse synthétique par une tubulure cylindrique 19 d'axe horizontal 20 au niveau de l'entrée 21 de la tubulure dans la chambre, en partie haute du corps 16.

La chambre de répartition 15 présente une section de passage de la matière pâteuse vers le bas (dans le direction de la flèche 23) dans le plan horizontal, décroissante sur au moins une partie 24 de la portion de chambre 25, située entre le plan horizontal 26 passant par la génératrice inférieure de l'orifice d'entrée 21 et le plan horizontal inférieur 27 délimitant la chambre de répartition ou partie basse, au fur et à mesure que l'on s'éloigne vers le bas.

Plus précisément la chambre de répartition comprend, comme dans le cas de la figure 1, une goulotte supérieure 28 en forme de croissant dont les cornes 29 se rejoignent en 30 symétriquement par rapport à l'axe de la tête 17, à l'opposé de l'orifice d'alimentation 21, et une zone inférieure 31 annulaire, de parois cylindriques, également d'axe 17, de hauteur décroissante au fur et à mesure que l'on s'éloigne dudit orifice 21, entre deux valeurs désignées par $h_1$ et $h_2$ sur la figure 2, $h_1$ étant la hauteur entre les plans horizontaux 26 et 27 et $h_2$ la hauteur du point inférieur de la goulotte en 30, toujours par rapport au plan 27. A noter que la valeur de $h_2$ est égale à 0 sur la figure 1. Egalement, on remarquera que la hauteur de la partie 24 est égale à $h_1-h_2$.

La zone inférieure 31 prolonge directement dans le sens vertical la goulotte supérieure 28, le cylindre vertical médian de cette zone inférieure 31, équidistant des parois de ladite zone, comprenant la génératrice inférieure de la goulotte 28.

La zone inférieure 31 de la tête 15, quant à elle, débouche vers le bas, sur une chambre d'extrusion 32 annulaire d'axe 17, de section constante en coupe verticale, trapézoïdale, isocèle, divergente vers le bas dans sa partie supérieure 34, et rectangulaire dans sa partie inférieure 35.

La tête comporte par ailleurs une grille annulaire de répartition 36, connue en soi, située en-dessous de la partie inférieure 35 de la chambre d'extrusion 32.

Cette grille est percée de trous et peut permettre, dans certains cas, d'améliorer encore l'homogénéisation des vitesses et des pressions subies par la matière pâteuse lors de son trajet dans la tête autour du poinçon 18, de façon à obtenir une viscosité parfaitement homogène de la matière pâteuse.

Suivant le polymère filé et sa pureté, un système de filtration (non représenté) pourra également être utilisé.

Par exemple la partie inférieure 35 de la chambre d'extrusion pourra comporter, de plus, un ou plusieurs tamis métalliques annulaires filtrants, d'ouverture convenablement choisie.

Ou encore, si nécessaire, on utilisera un système de filtration connu en lui-même, comportant par exemple des bougies de filtration poreuses ou un lit de matériaux granulaires.

Enfin, la tête 14 comporte en partie basse 37, une plaque de filature 38, de forme annulaire, percée en son centre 39 d'un trou cylindrique de même diamètre que le trou du poinçon 18, et percée de trous 40 d'extrusion des fils, régulièrement répartis sur sa surface et de diamètre calibré.

Dans le mode de réalisation décrit ci-dessus, le corps cylindrique 16 est en matériau thermiquement conducteur. Des résistances électriques internes 41 et externes 42 au corps 16, de chauffage et/ou de maintien en température dudit corps, par conduction et/ou rayonnement, sont prévues. Elles sont par exemple constituées par des bobines cylindriques de fils de résistance chauffants alimentés en électricité coopérant jointivement avec les faces interne et externe du corps cylindrique de la tête.

Une régulation en température du corps, et donc du matériau qu'il contient en cours d'extrusion, peut également être prévue. Elle se fait, par exemple, via les moyens d'alimentation électrique des résistances commandés par l'intermédiaire des thermocouples (non représentés) fixés de façon régulière sur le corps 16.

Un capot 43 de protection, isolant thermiquement, recouvre le corps et les résistances sur toute leur surface externe à l'exception de la face inférieure, par où sortent les fils extrudés.

Bien entendu d'autres moyens de chauffage du corps peuvent être prévus par exemple par circulation d'un fluide caloporteur à l'intérieur et/ou en contact avec l'extérieur du corps 16.

Dans d'autres modes de réalisation le corps est en matériau non conductible thermiquement. Aucun moyen de chauffage de la matière pâteuse au niveau de la tête n'est alors prévu, la matière pâteuse ne restant à l'intérieur de ladite tête d'extrusion que pendant un temps limité, n'en traînant pas de variation gênante et significative de sa température.

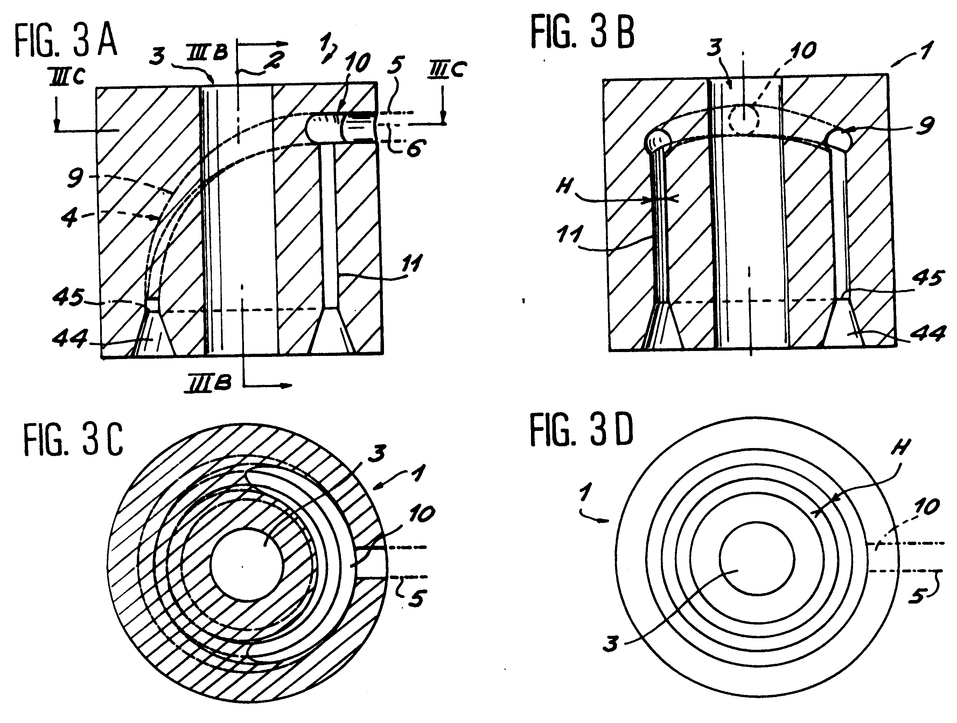

Les figures 3A à 3D montrent en coupe verticale, en leur partie supérieure, le corps de la figure 1. On a donc utilisé pour ces figures, quand il y avait lieu, des numéros de référence indentiques à ceux utilisés pour cette dernière. La chambre de répartition 4 y est prolongée d'une chambre d'extrusion annulaire 44 de section transversale trapézoïdale constante, divergente vers le bas, et dont la base supérieure 45 a une largeur H égale à celle de la fente verticale de la zone inférieure 11 de la chambre de répartition 4.

Dans ce mode de réalisation, l'orifice d'entrée 10 s'inscrit dans la projection sur le plan vertical de la goulotte 9 (voir figure 3B).

On va maintenant expliciter plus précisément le dimensionnement d'une chambre de répartition selon l'invention.

Telle que généralement définie, la chambre de répartition selon l'invention comporte une section de passage vers le bas de la matière pâteuse dans le plan horizontal, décroissante au fur et à mesure que l'on s'éloigne du plan horizontal inférieur tangent au canal d'alimentation latéral perpendiculaire à la tête, cette décroissance étant agencée pour engendrer dans le temps des contraintes de pression et de cisaillement sur la matière pâteuse, sensiblement identiques quelque soit le chemin emprunté par ladite matière pâteuse pour s'écouler du canal d'alimentation latéral au bas de la chambre.

Le calcul des formes de la goulotte et de la fente du mode de réalisation de l'invention plus particulièrement décrit ici, comme celui de toute autre forme répondant au critère ci-dessus, découle directement de celui d'une filière annulaire à fente large de type connu.

Elle est donc à la portée de l'homme du métier qui aura, de plus, pris en compte les hypothèses suivantes :
* incompressibilité du fluide,
* comportement isotherme du fluide (on admet qu'il n'y a pas de dissipation visqueuse ni de transfert thermique par conduction),

* absence d'interaction au sein du fluide entre le canal et la fente.

Les conditions aux limites fixées dans la définition ci-dessus s'expriment en écrivant que les isobares au sein de la matière pâteuse fluide lorsqu'elle descend vers le bas, sont parallèles à la fente à la sortie de la chambre de répartition.

Les inventeurs ont par ailleurs considérés par hypothèse qu'il convenait d'utiliser les viscosités dites "représentatives" connues de l'homme du métier.

Pour des débits de pression laminaires et isothermes, il existe en effet un emplacement dans le canal d'écoulement où les vitesses de cisaillement rencontrées, pour un produit ayant un comportement pseudo-plastique, ont un profil identique à celui d'un produit newtonien. Il est donc alors possible de représenter simplement, à partir d'écoulement de poiseuille tube, plan ..., les viscosités "représentatives" d'un produit ayant un comportement pseudo-plastique.

Pour ce faire on se référera au tableau suivant :

| GEOMETRIE | STRUCTURE PSEUDO-PLASTIQUE VALEUR REPRESENTATIVE |
|---|---|
| cercle | $\dot{\gamma} = \dfrac{4\,Q}{R^3}.e_o \qquad e_o = 0.815$ |
| fente rectangle | $\dot{\gamma} = \dfrac{6\,Q}{B\,H^2}.e_{\square} \qquad e_{\square} = 0.772$ |
| fente anneau | $\dot{\gamma} = \dfrac{Q}{(R_e^2 - R_i^2)\,R} = \dfrac{V}{R}$ |

La signification des paramètres employés dans ce tableau est la suivante :

$\dot{\gamma}$ : viscosité

Q : débit de matière pseudo-plastique traversant la géométrie concernée, avec :

* dans le cas d'une fente cylindrique :

R : rayon du cercle

$e_o$ : facteur de forme lié à la viscosité du produit

* dans le cas d'une fente rectangulaire :

B : longueur du rectangle

H : largeur du rectangle

$e_{\square}$ : facteur de forme lié à la viscosité du produit

* dans le cas d'une fente annulaire :

$R_e$ : rayon externe de l'anneau

$R_i$ : rayon interne de l'anneau

H : largeur de l'anneau ($H = R_e - R_i$)

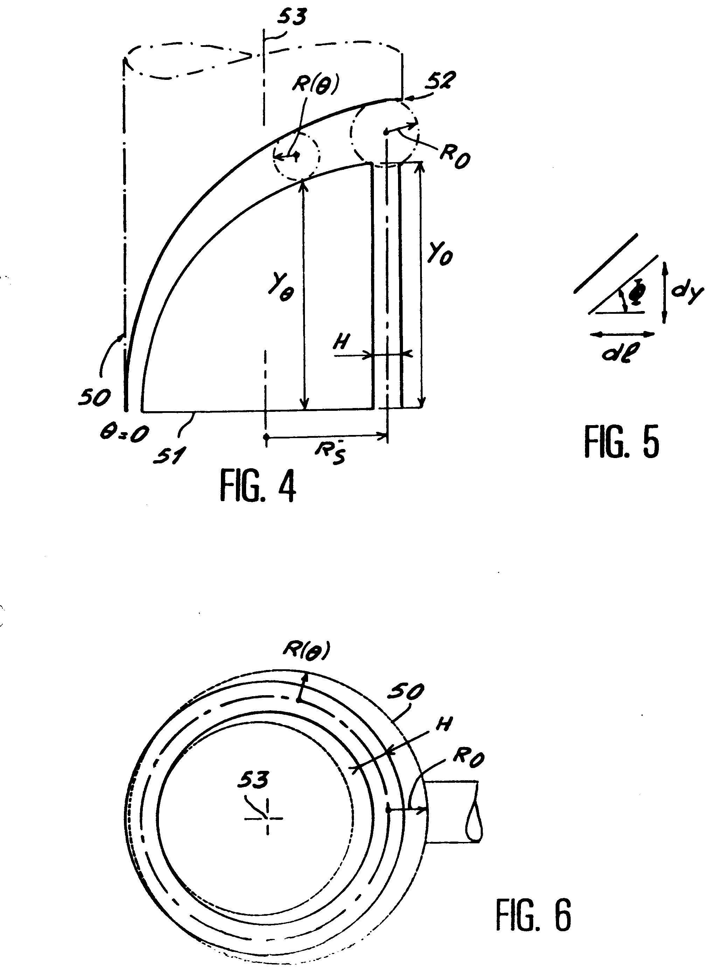

Nous allons maintenant, à titre d'exemple, effectuer le calcul dans le cadre du mode de réalisation plus particulièrement décrit ici, en utilisant les références des figures 4, 5 et 6.

Pour des raisons de symétrie, le calcul de la goulotte et de la fente est effectué pour une moitié de chambre de répartition.

Les paramètres utilisés sont les suivants :

$Q_o$ : débit sur une moitié de chambre de répartition

H : entrefer constant de la fente 50 constituant la zone inférieure
$Y_o$ : hauteur maximum de la fente, $Y_o = Y(L)$
L : longueur de la fente de sortie au niveau du plan horizontal de sortie 51 (sur une moitié de chambre)
l : pas de variation sur la longueur L
$R_o$ : rayon initial de la goulotte 52
dP : perte de charge
$\gamma g$ : taux de cisaillement représentatif dans la goulotte 52
$\gamma f$ : taux de cisaillement représentatif dans la fente 50
$\eta g$ : viscosité représentative dans la goulotte
$\eta f$ : viscosité représentative dans la fente
V : vitesse moyenne du matériau pâteux
$\theta$ : angle de révolution de la géométrie autour de l'axe 53 du poinçon cylindrique creux
$\Phi$ : angle entre le circonférence de la goulotte et le plan horizontal au niveau de la fente (tan $\Phi$=dy/dl).

Il convient ensuite de procéder aux calculs suivants :

Concernant la section de la goulotte, en supposant que la contrainte de cisaillement à la paroi ne soit pas fonction de 1, il suffit d'écrire que le taux de cisaillement est alors constant, soit :

$$\gamma g = \frac{4.Qo}{\pi .R^3(1)} = \text{constante} \quad (1)$$

Il vient alors :

$$R(1) = Ro. (l/L)^{1/3} \quad (2)$$

Concernant le calcul de la forme de la fente (zone inférieure de la chambre de répartition), on procède comme suit :

En supposant que la vitesse de sortie de la matière pâteuse est identique sur toute la largeur de la chambre de répartition, le débit volumique dans la goulotte doit diminuer de façon linéaire, il vient :

$$Q(l) = Qo.l/L \quad (3)$$

Pour la goulotte, la vitesse moyenne est égale à :

$$V_g = \frac{Qo.l}{\pi.R^2(l) L} \quad (4)$$

d'où

$$dP_g = \frac{8.Qo}{\pi.L} \int_1^L \frac{1. \eta_g(1)}{R^4(1)} \quad (5)$$

En ce qui concerne la fente, la vitesse moyenne est donnée par la formule :

$$V_f = \frac{Qo}{L.H} \quad (6)$$

d'où

$$dP_f = \frac{12\,\eta_f(1)}{H^2}.y(l) \quad (7)$$

Cela nous donne une perte de charge totale de :

$$dP_g + dP_f = \frac{8.Qo}{\pi L} \int_1^L \frac{1.\eta_g(1)}{R^4(1)}.dl + \frac{12\eta_f(1)}{H^2}.y(1) \quad (8)$$

En adoptant l'hypothèse de l'invention, à savoir des isobares parallèles à la fente, à la sortie de cette dernière, il vient :

$$\frac{\delta P}{\delta l} = 0 \quad (9)$$

Pour la goulotte, si nous avons un même taux de cisaillement pour chaque emplacement, il vient :

$$\eta_g = {}_f(l) \quad (10)$$

Comme pour la fente H = cste :

$$\eta f = {}_f(l) \quad (11)$$

et il vient :

$$\frac{dy}{dl} = \frac{\eta_g}{\eta_f} \frac{2.H^3.l}{3\,\pi.R^4(l)} \quad (12)$$

avec

$$R(l) = R_o. (1/L)^{1/3} \quad (2)$$

cela nous donne

$$\frac{dy}{dl} = \frac{\eta_g}{\eta_f} \frac{2.H^3.l}{3.\,\pi.R_o^4.(1/L)^{4/3}} \quad (13)$$

soit après intégration

$$y(l) = \frac{\eta_g}{\eta_f} \frac{H^3.L^{4/3}.l^{2/3}}{\pi.R_o^4} \quad (14)$$

avec

$$Y(L) = Y_o. = \frac{\eta_g}{\eta_f} \frac{H^3.L^2}{\pi.R_o^4} \quad (15)$$

d'où

$$Y(l) = Y_o. (1/L)^{2/3} \quad (16)$$

Dans ce cas de figure $Y_o$ est liée aux viscosités représentatives du produit.

$$\eta_g = f_{(\,g)} = f\left(\frac{1.038\,Q_o}{R_o^3}\right) \quad (17)$$

$$\eta_f = f_{(\,f)} = f\left(\frac{4.631\,Q_o}{H^3L}\right) \quad (18)$$

Les deux paramètres $R_o$ et H sont choisis librement.

Dans le mode de réalisation plus particulièrement décrit ici, en posant comme hypothèse que le produit subit la même contrainte de cisaillement quelque soit le chemin emprunté, c'est-à-dire

$$\gamma_g(l) = \gamma_f(l) \text{ (et } \eta_g = \eta_f)$$

$$\frac{4\,Q_o\,l}{\pi\,R^3\,(l)L}. e_O = \frac{6\,Q_o}{L\,H^2}.e_\square \quad (20)$$

avec $e_o = 0.815$ et $e_\square = 0.772$

il vient

$$R(l) = 0.0607. (H^2.l)^{1/3} \quad (21)$$

$$R_o = R(L) = 0.0607.(H^2.L)^{1/3} \quad (22)$$

et

$$Y_o = 2.3398. (H^2.L)^{1/3} \quad (23)$$

La géométrie de la chambre de répartition est alors complètement indépendante et universelle.

Dans le cas d'une filière annulaire, telle que représentée aux figures 4, 5 et 6, il suffit de remplacer L par $\pi.r$ et l par $\theta.r$ et il vient :

$$Y(\theta) = Y_o. (\theta/\pi)^{2/3} \quad (24)$$

$$R(\theta) = R_o. (\theta/\pi)^{1/3} \quad (25)$$

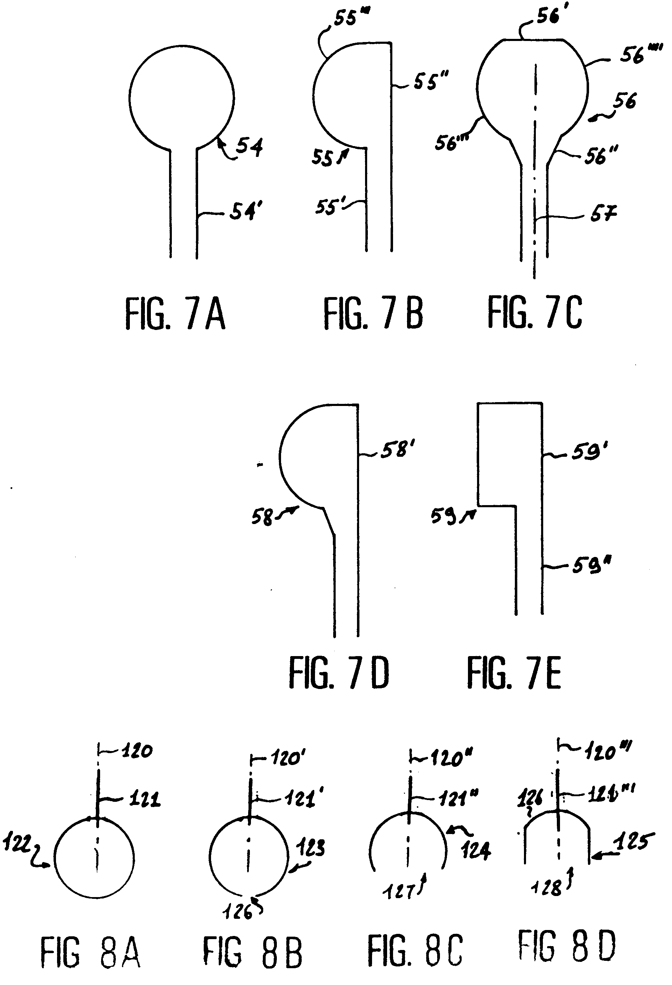

Les équations précédentes sont valables pour une section circulaire de la goulotte 54, avec fente 54' à entrefer constant, comme représentée sur la figure 7A.

Mais on peut tout a fait envisager (figure 7B) une section de goulotte 55 de forme demi-circulaire, une paroi de la fente 55' prolongée verticalement vers le haut constituant une face latérale 55", l'autre 55''' étant de forme arrondie, en demi-cercle.

La figure 7C montre une forme de goulotte 56 en goutte d'eau, c'est-à-dire par exemple présentant une section circulaire tronquée horizontalement en partie haute 56' et présentant une partie basse 56" trapézoïdale divergente vers le bas, la petite base du trapèze étant de la largeur de l'entrefer (H), qui la prolonge vers le bas, et les deux faces latérales 56''' et 56"" de la goulotte étant symétriques par rapport à un plan vertical médian 57, en arc de cercle.

La goulotte 58 (figure 7D) peut également être en forme de demi-goutte d'eau, avec une face 58' prolongeant la fente comme dans le cas de la figure 7B.

Une section transversale de la goulotte 59, carrée ou rectangulaire, (figure 7E), avec une face latérale 59'

(ou non) dans le même plan que les parois de la fente 59" est également possible, etc...

Pour ces différentes formes, il suffit alors de définir un diamètre hydraulique équivalent : $D_E = 4S/P$, donc un rayon équivalent $R_E$, avec :

S = surface de la section transversale de la goulotte,

P = périmètre de la section transversale de la goulotte.

Le calcul de la goulotte pourra être effectué en reprenant la relation (2).

On peut aussi, en prenant comme hypothèse une équivalence des surfaces, calculer les paramètres géométriques de ces formes en fonction de R(l).

Ainsi, la décroissance combinée, par rapport à la plaque de filature disposée horizontalement, de la section de la goulotte de répartition et de la hauteur de la fente, as surent une répartition et une distribution parfaitement homogène de la matière dans cette zone en respectant les conditions : chute de pression, temps de maintien en pression et vitesse de cisaillement respectivement sensiblement identiques, quels que soient les chemins d'écoulement empruntés par la matière.

Les figures 8A, 8B, 8C et 8D donnent schématiquement des exemples de chambre de répartition, selon des modes de réalisation de l'invention qui, étant symétriques par rapport au plan vertical (120, 120′, 120″, 120‴) passant par l'axe du conduit d'alimentation (121, 121′, 121″, 121‴), peuvent ainsi présenter une forme généralement cylindrique 122 comme précédemment décrit (figure 8A), en portions de cercle non refermées 123, 124 (figure 8B et figure 8C), ou en U 125 dont la base 126 est plus ou moins arrondie (figure 8D).

En effet, de par la géométrie originale proposée par l'invention, qui présente un canal d'alimentation perpendiculaire à la tête de filage et une zone de répartition par rapport à ce canal, la tête d'extrusion de filage peut adopter des géométries de ce type.

Les ouvertures latérales 126, 127, 128 respectivement prévues dans le cas des modes de réalisation, plus ou moins ouvertes, correspondant aux figures 8B, 8C et 8D, permettent par ailleurs l'introduction de fils ou fibres dans le poinçon creux de la tête, de façon latérale.

En se référant aux figures 9A à 9C, on voit également que la tête d'extrusion selon l'invention peut présenter un corps 60 de forme cylindrique, avec poinçon creux 61 et alimentation latérale 62.

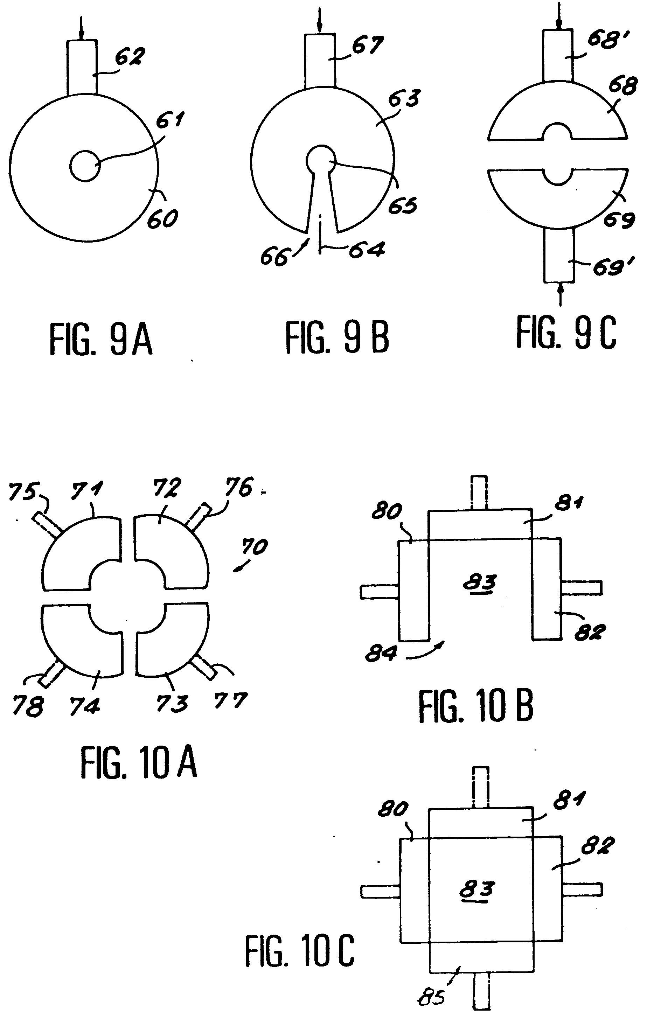

Le corps (figure 9B) peut également être une portion de cylindre 63, symétrique par rapport au plan vertical 64 passant par l'axe du canal 67, avec poinçon central 65 et fente latérale 66, en forme de portion d'anneau cylindrique, par exemple de parois radiales, située à l'opposé du canal latéral 67, par rapport à l'axe de la tête.

De même, la tête d'extrusion selon l'invention peut être réalisée en deux parties 68, 69 par exemple semi-annulaires, ou en portion d'anneau cylindrique (figure 9C) ou ovale, par exemple identiques. L'entrée du polymère se fait latéralement respectivement par les tubulures opposées 68′ et 69′.

Les deux parties semi-annulaires sont disposées en vis-à-vis sans contact. Cette disposition, outre le fait de faciliter le passage de fibres ou fils dans la tête d'extrusion, crée dans la nappe de filaments produits, des espaces libres permettant l'introduction d'autres produits au coeur de l'ensemble.

Les figures 10A, 10B et 10C sont d'autres modes de réalisation de tête d'extrusion selon l'invention.

La figure 10A montre une tête d'extrusion 70 présentant quatre corps de section en quart d'anneau cylindrique 71, 72, 73, 74 identiques, respectivement alimentés par un canal ou tubulure d'alimentation 75, 76, 77, 78. Les chambres internes à ces corps sont par exemple du type à goulotte et fente de prolongation vers le bas de la chambre à entrefer constant.

La figure 10B montre une tête présentant trois corps 80, 81, 82 de filières, identiques, rectangulaires disposés de façon adjacente, à angle droit les uns avec les autres, pour dégager un espace central carré 83 ouvert sur son côté 84.

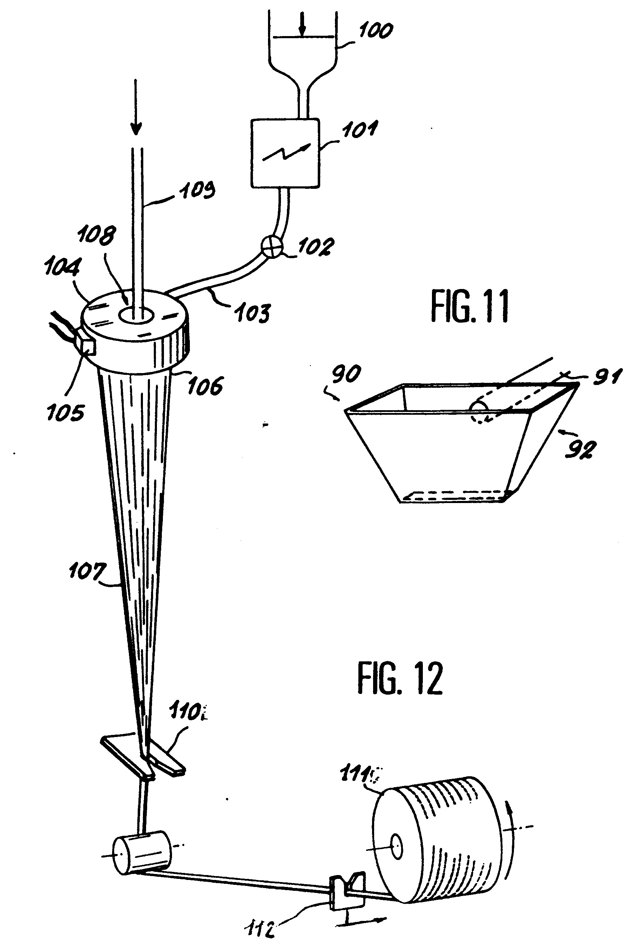

La figure 10C présente quatre corps de filières identiques rectangulaires, par exemple présentant une chambre du type de celle décrite sur la figure 11, un corps 85 étant disposé le long du côté 84 du carré 83.

Le mode de réalisation plus particulièrement décrit ici n'est en effet et comme on l'a compris aucunement limitatif et tout autre mode de réalisation de la chambre répondant aux critères ci-dessus peut convenir, par exemple une chambre du type de celle apparaissant sur la figure 11.

La figure 11 montre une chambre 90 alimentée par une tubulure latérale 91 en partie supérieure 92 de ladite chambre. Celle-ci présente une section de passage rectangulaire, mais elle peut être également trapézoïdale par exemple, de la matière pâteuse introduite en 92, décroissante au fur et à mesure que l'on s'éloigne du plan horizontal passant par la génératrice inférieure de la tubulure d'alimentation.

On va maintenant décrire, en faisant référence à la figure 12, un procédé de mise en oeuvre de la tête d'extrusion selon l'invention plus particulièrement décrite ici, appliqué, de façon nullement limitative, à la fabrication de fils extrudés en matière synthétique.

La matière synthétique, par exemple un polymère thermo plastique, par exemple un polyamide, est stockée sous forme de granulés dans une trémie 100 qui alimente un four de fusion 101 vertical. Le polymère est fondu dans ce four, puis est transporté à l'état fondu sous pression par une pompe doseuse 102, par exemple une pompe à engrenage dont le rôle est d'assurer une parfaite régularité de la pression et du débit d'alimentation du canal en polymère fondu.

Il est tout à fait possible d'installer en amont de ce canal d'alimentation, un mélangeur statique par exemple, qui aura pour fonction d'améliorer encore l'homogénéisation en température et en vitesse du polymère fondu.

La pompe doseuse alimente le canal 103 qui débouche sur la tête d'extrusion 104 dans une chambre répondant aux conditions de l'invention.

Cette tête est par exemple chauffée par des moyens connus en soi 105, par exemple électriques.

Sous la pression exercée le polymère s'écoule dans la chambre interne de façon homogène, jusqu'à la plaque d'extrusion inférieure où le polymère se présente sur tout le pourtour de la tête avec une viscosité homogène.

Le polymère s'écoule ensuite des orifices de la plaque de filature sous la forme de jets fluides 106 qui sont étirés mécaniquement puis refroidis sous forme d'une pluralité de filaments continus 107.

La tête d'extrusion annulaire est pourvue d'un passage central 108, au travers duquel un matériau linéaire, par exemple un fil de verre continu 109, est projeté.

Par extrusion puis étirage mécanique à la suite de la tête 104, il se forme une nappe conique dont la pointe est dirigée vers le bas et guidée vers un dispositif d'assemblage muni par exemple d'une encoche 110 qui provoque la réunion physique du fil et de la nappe et donne naissance à un seul faisceau composite. Le faisceau est ensuite, par exemple, bobiné directement sur un support 111 en rotation sur lequel il est réparti de façon connue en soi par une plaque à encoches 112 animée d'un mouvement de va et vient schématisé par la double flèche sur la figure 12.

L'un des modes de réalisation décrits précédemment sera pris comme exemple. Il s'agit d'une tête d'extrusion du type de celle illustrée par les figures 3A à 3D, 4, 5 et 6.

Cette tête présente les caractéristiques suivantes :

```
* diamètre de canal d'alimentation (19) :    20   mm
* diamètre initial de la goulotte        :    20   mm
  cylindrique (2Ro)
* rayon externe de la fente (Re)         :    88,5 mm
* rayon interne de la fente (Ri)         :    84,5 mm
* entrefer constant de la fente (H)      :     4   mm
* hauteur maximale de la fente (Yo)      :   157,5 mm
```

La variation du diamètre de la goulotte et celle de la hauteur de la fente sont obtenues grâce aux relations (24) et (25).

```
* température du corps de la tête        :   250°C
* débit de la tête                       :    20 kg/h
```

La matière qui alimente la tête est un polypropylène homopolymère dont l'indice de fluidité est égal à 20 dg/min, mesurée selon la norme ISO 1133.

Le taux de cisaillement de cette matière dans la goulotte $\gamma_g$ varie peu autour de 3,5. Son taux de cisaillement dans la fente $\gamma_f$ varie également peu autour de 3,8.

Aucune zone de la tête est suralimentée ou sous alimentée. On constate en particulier que la température du polymère dans un plan horizontal passant par la base de la fente varie très peu. Cette variation est de l'ordre de 1°C entre la veine centrale (240°C environ) et les bords externe et interne de la fente (241°C environ). La plaque équipant la base de la tête est perforée de 768 orifices disposés sur 8 cercles concentriques. Le diamètre de ces orifices est de 550μm et leur rapport hauteur/diamètre est de 4.

Les filaments obtenus présentent une grande régularité de diamètre autour de 25 μm.

Comme il va de soi et comme il résulte d'ailleurs de ce qui précède, la présente invention n'est pas limitée aux modes de réalisation plus particulièrement décrits.

## Revendications

1. Tête d'extrusion (14, 70, 104) pour la production de fils à partir d'une matière rendue pâteuse par chauffage, comprenant au moins un corps (1, 16, 60, 63, 68, 69, 71, 72, 73, 74, 80, 81, 82, 85) définissant une chambre de répartition (4, 15) de matière pâteuse au-dessus d'une plaque (38) percée d'orifices d'extrusion (40), ladite chambre étant alimentée en matière pâteuse par au moins un canal d'alimentation latéral supérieur (5, 19, 62, 67, 68', 75, 76, 77, 78, 103), allongé autour d'un axe (6, 20) dans sa partie terminale de jonction avec la chambre, **caractérisée en ce que** la chambre de répartition comporte une section de passage vers le bas de la matière pâteuse, dans le plan horizontal, décroissante sur au moins une partie (24) de la hauteur de la chambre, au fur et à mesure que l'on s'éloigne vers le bas du canal d'alimentation, cette décroissance étant agencée pour engendrer dans le temps des contraintes de pression et de cisaillement sur la matière pâteuse, entre le canal d'alimentation latéral (19) et le bas de la chambre (27), respectivement sensiblement identiques quel que soit le chemin emprunté par ladite matière pâteuse pour s'écouler dudit canal d'alimentation latéral au bas de ladite chambre.

2. Tête d'extrusion selon la revendication 1, **caractérisée en ce que** la chambre présente, une zone inférieure (11, 31, 50), d'entrefer (H), en forme de fente de section verticale décroissante, au fur et à mesure que l'on s'éloigne du canal d'alimentation latéral.

3. Tête d'extrusion selon la revendication 2, **caractérisée en ce que** la zone inférieure en forme de fente présente des parois latérales verticales cylindriques d'entrefer (H) constant, et de hauteur (Y), par rapport au plan (13, 27, 51) délimitant le bas de la chambre, décroissante au fur et à mesure que l'on s'éloigne du canal d'alimentation latéral (5, 19).

4. Tête d'extrusion selon la revendication 2, **caractérisée en ce que** la zone inférieure en forme de fente présente des parois latérales verticales cylindriques d'entrefer (H), et de hauteur (Y) par rapport au plan délimitant le bas de la chambre, toutes deux décroissantes au fur et à mesure que l'on s'éloigne du canal d'alimentation latéral.

5. Tête d'extrusion selon l'une quelconque des revendications 2 à 4, **caractérisée en ce que** la chambre comporte une zone supérieure (9, 28, 54, 55, 56, 58, 59), en forme de goulotte dont la section transversale (s) décroit au fur et à mesure que l'on s'éloigne du canal d'alimentation latéral.

6. Tête d'extrusion pour la production de fils à partir de matière synthétique fondue comprenant au moins un corps (1, 16, 60, 63, 68, 69, 71, 72, 73, 74, 80, 81, 82, 85) définissant une chambre de répartition de la matière synthétique fondue au-dessus d'une plaque horizontale percée d'orifices d'extrusion, ladite chambre étant alimentée en matière synthétique par au moins un canal d'alimentation latéral supérieur, **caractérisée en ce** que la chambre comporte:
   * une zone supérieure (9, 28, 54, 55, 56, 58, 59) en forme de goulotte dont la section transversale (s) décroît au fur et à mesure que l'on s'éloigne de l'orifice d'entrée (10, 21) du canal d'alimentation latéral (5, 19, 62, 67, 68', 75, 76, 77, 78, 103), qui déboucha dans ladite chambre et,
   * une zone inférieure (11, 31, 50) annulaire présentant des parois latérales verticales cylindriques d'entrefer (H) constant, et de hauteur (Y), par rapport au plan délimitant le bas de la chambre, décroissante au fur et à mesure que l'on s'éloigne dudit orifice d'entrée.

7. Tête d'extrusion selon l'une quelconque des revendications 5 et 6, **caractérisée en ce que** la goulotte (54, 55) présente une section transversale circulaire ou demi-circulaire.

8. Tête d'extrusion selon l'une quelconque des revendicatins 5 et 6, **caractérisée en ce que** la goulotte (59) présente une section transversale carrée ou rectangulaire.

9. Tête d'extrusion selon l'une quelconque des revendications 5 et 6, **caractérisée en ce que** la goulotte (56, 58) présente une section transversale en goutte d'eau ou demi-goutte d'eau.

10. Tête d'extrusion selon l'une quelconque des revendications 5 à 9, **caractérisée en ce que** le rayon hydraulique [R(l)] de la goulotte et la hauteur [Y(l)] de la fente mesurée à une distance l de l'axe du canal d'alimentation latéral, le long de l'axe de la goulotte, sont déterminés par les formules suivantes :
   * $R(l) = R_o (l/L)^{1/3}$
   * $Y(l) = Y_o (l/L)^{2/3}$

avec :

* $R_o$ = rayon hydraulique de la goulotte au droit de l'axe du canal d'alimentation,
* L = longueur de la fente mesurée à partir de l'axe du canal d'alimentation,
* $Y_o$ = hauteur maximum de la fente, au droit de l'axe du canal d'alimentation.

11. Tête d'extrusion selon la revendication 10, **caractérisée en ce que** :

* $R_o = K. (H^2.L)^{1/3}$ et
* $Y_o = K' \cdot (H^2.L)^{1/3}$,

K et K' étant des constantes.

12. Tête d'extrusion selon la revendication 11, **caractérisée en ce que** K est sensiblement égal à 0.607 et K' à 2.3398.

13. Tête d'extrusion selon l'une quelconque des revendications précédentes, **caractérisée en ce qu'**elle comporte deux portions de chambre de répartition symétriques par rapport au plan vertical (8) passant par l'axe du canal d'alimentation.

14. Tête d'extrusion selon la revendication 13, **caractérisée en ce que** la chambre symétrique présente une section horizontale, en partie basse de la chambre, présentant une configuration en O.

15. Tête d'extrusion selon la revendication 13, **caractérisée en ce que** la chambre symétrique présente une section horizontale, en partie basse de la chambre, présentant une configuration en C, ou en U, les extrémités des branches du C ou du U pouvant être plus ou moins écartées.

16. Tête d'extrusion selon l'une quelconque des revendications précédentes, **caractérisée en ce qu'**elle comporte plusieurs corps (68, 69, 71, 72, 73, 74 ; 80, 81, 82, 85) et/ou portions de chambre identiques, chacun alimenté par un canal d'alimentation latéral en partie supérieure.

17. Tête d'extrusion selon la revendication 15, **caractérisée en ce que** les corps sont disposés autour d'un évidement central.

18. Tête d'extrusion (14) selon l'une quelconque des revendications 1 à 15, **caractérisée en ce qu'**elle comporte un poinçon central creux cylindrique (3, 18), la chambre s'enroulant autour dudit poinçon.

19. Tête d'extrusion (14) selon l'une quelconque des revendications précédentes, **caractérisée en ce que** la zone inférieure (15) de la chambre débouche sur une chambre d'extrusion annulaire (34) de section transversale constante en forme de trapèze renversé.

20. Tête d'extrusion (14) selon l'une quelconque des revendications précédentes, **caractérisée en ce que** la zone inférieure (15) de la chambre débouche sur une chambre d'extrusion annulaire équipée, en sa partie inférieure, au-dessus de la plaque (38) percée d'orifices d'extrusion, d'une grille (36) h'omégénéisation de la matière pâteuse, avant son extrusion au travers de ladite plaque.

21. Tête d'extrusion selon l'une quelconque des revendications précédentes, **caractérisée en ce qu'**elle comporte des cartouches (41, 42) de chauffage placées dans le, et/ou autour du, corps de la tête.

22. Tête d'extrusion selon l'une quelconque des revendications précédentes, **caractérisée en ce qu'**elle comporte des moyens de chauffage en au moins deux parties du corps de façon à chauffer lesdites parties du corps de façon indépendante.

EP 0 532 407 A1

FIG. 1

FIG. 2

13

FIG. 3A

FIG. 3B

FIG. 3C

FIG. 3D

14

FIG. 4

FIG. 5

FIG. 6

FIG. 7A

FIG. 7B

FIG. 7C

FIG. 7D

FIG. 7E

FIG 8A

FIG 8B

FIG. 8C

FIG 8D

FIG. 9 A

FIG. 9 B

FIG. 9 C

FIG. 10 A

FIG. 10 B

FIG. 10 C

FIG. 11

FIG. 12

Office européen
des brevets

**RAPPORT DE RECHERCHE EUROPEENNE**

Numero de la demande

EP 92 40 2454

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 435 786 (AMERICAN NATIONAL CAN CO.) <br> * Page 5, lignes 1-25; figures 2,3 * <br> --- | 1-9,13-22 | B 29 C 47/28 <br> B 29 C 47/30 <br> B 29 C 33/00 |
| X | EP-A-0 323 043 (AMERICAN NATIONAL CAN CO.) <br> * Colonne 7, lignes 9-14; figure 1; colonne 10, lignes 42-48; figure 2 * <br> --- | 1-6 | |
| A | US-A-3 608 137 (N.R. WILSON) <br> * Colonne 1, lignes 52-69 * <br> --- | 1 | |
| D,A | US-A-3 307 216 (A. DUNN et al.) <br> * Colonne 1, lignes 52-57; colonne 2, lignes 31-39; figure 1 * <br> --- | 1-9,13-22 | |
| A | DE-A-1 245 100 (S. FISCHER et al.) <br> * Colonne 3, lignes 20-33; figures 1,2 * <br> ----- | 1,5,6, 15,18 | |

**DOMAINES TECHNIQUES RECHERCHES (Int. Cl.5)**

B 29 C

Le présent rapport a été établi pour toutes les revendications

| Lieu de la recherche | Date d'achèvement de la recherche | Examinateur |
|---|---|---|
| LA HAYE | 23-10-1992 | TOPALIDIS A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................
& : membre de la même famille, document correspondant

EPO FORM 1503 03.82 (P0402)